(19) Europäisches Patentamt
European Patent Office
Office européen des brevets

(11) EP 1 120 158 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.[7]: **B01J 21/10**, B01J 23/22, B01J 35/10, C08F 4/654, C08F 110/06

(21) Anmeldenummer: **00127656.7**

(22) Anmeldetag: **18.12.2000**

(54) **Katalysatorsysteme vom Typ der Ziegler-Natta-Katalysatoren**

Catalytic systems of the Ziegler-Natta type

Systèmes catalytiques du type Ziegler-Natta

(84) Benannte Vertragsstaaten:
**AT BE CH CY DE DK ES FI FR GB GR IE IT LI LU MC NL PT SE TR**

(30) Priorität: **21.01.2000 DE 10002653**

(43) Veröffentlichungstag der Anmeldung:
**01.08.2001 Patentblatt 2001/31**

(73) Patentinhaber: **Basell Poliolefine Italia S.p.A.
20124 Milano (IT)**

(72) Erfinder:
- **Spaether, Wolf, Dr.
68549 Ilvesheim (DE)**
- **Hüffer, Stephan, Dr.
67063 Ludwigshafen (DE)**
- **Lynch, John, Dr.
67590 Monsheim (DE)**
- **Bidell, Wolfgang, Dr.
68159 Mannheim (DE)**
- **Rösch, Joachim, Dr.
67063 Ludwigshafen (DE)**
- **Schweier, Günther, Dr.
67159 Friedelsheim (DE)**
- **Hingmann, Roland, Dr.
08960 Barcelona (ES)**
- **Segul, Alexandre, Dr.
43007 Tarragona (ES)**
- **Hemmerich, Rainer, Dr.
67269 Grünstadt (DE)**
- **Treffkorn, Ingo
76767 Hagenbach (DE)**

(74) Vertreter: **Colucci, Giuseppe et al
Basell Poliolefine Italia S.p.A.,
Intellectual Property,
P.le G. Donegani 12
44100 Ferrara (IT)**

(56) Entgegenhaltungen:
**EP-A- 0 761 696** **EP-A- 0 812 861**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 120 158 B1

## Beschreibung

Die vorliegende Erfindung betrifft neuartige Katalysatorsysteme vom Typ der Ziegler-Natta-Katalysatoren, enthaltend als aktive Bestandteile

a) eine Feststoffkomponente, enthaltend eine Verbindung des Titans oder des Vanadiums, eine Verbindung des Magnesiums, ein teilchenförmiges anorganisches Oxid als Träger und eine interne Elektronendonorverbindung, sowie als Cokatalysator

b) eine Aluminiumverbindung und

c) gegebenenfalls eine weitere, externe Elektronendonorverbindung,

wobei das verwendete teilchenförmige, anorganische Oxid eine spezifische Oberfläche von 350 bis 1000 $m^2/g$ und einen mittleren Teilchendurchmesser $\bar{D}$ im Bereich von 5 bis 60 µm aufweist und aus Teilchen besteht, die sich aus Primärpartikeln mit einem mittleren Teilchendurchmesser $\bar{d}$ im Bereich von 1 bis 10 µm zusammensetzen und die zwischen den Primärpartikeln Hohlräume oder Kanäle enthalten, wobei der makroskopische Anteil der Hohlräume oder Kanäle mit einem Durchmesser größer 1 µm an den Teilchen der anorganischen Oxide im Bereich von 5 bis 30 Vol. -% liegt und wobei das molare Verhältnis zwischen der Verbindung des Magnesiums und dem teilchenförmigen, anorganischen Oxid 0,5:1 bis 2.0:1 beträgt.

Außerdem betrifft die vorliegende Erfindung ein Verfahren zur Herstellung von Homo- und Copolymerisaten des Propylens mit Hilfe derartiger Katalysatorsysteme, die hiernach erhältlichen Homound Copolymerisate des Propylens, deren Verwendung zur Herstellung von Folien, Fasern oder Formkörpern sowie die Folien, Fasern oder Formkörper selbst.

Die WO 96/05236 beschreibt eine geträgerte Katalysatorkomponente, die ein Magnesiumhalogenid und als Träger einen teilchenförmigen Feststoff enthält, der eine spezifische Oberfläche von 10 bis 1000 $m^2/g$ aufweist und bei dem die Mehrheit der Trägerteilchen als Agglomerate von Unterteilchen vorliegt. Mit Hilfe solcher Katalysatorkomponenten gelingt die Herstellung von Polymerisaten aus Alk-1-enen mit guter Morphologie und Schüttdichte bei hoher Katalysatoreffizienz.

Die EP-A 761 696 betrifft Katalysatorsysteme vom Typ der Ziegler-Natta-Katalysatoren, die teilchenförmige Kieselgele als Träger enthalten, welche einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweisen, deren makroskopischer Volumenanteil am Gesamtpartikel im Bereich von 5 bis 20 % liegt. Die Katalysatorsysteme zeichnen sich durch eine hohe Produktivität und Stereospezifität bei der Polymerisation von $C_2$-$C_{10}$-Alk-1-enen aus und aus solchen Polymerisaten hergestellte Folien besitzten eine reduzierte Neigung hinsichtlich der Bildung von Mikrostippen, d.h. von kleinen Unregelmäßigkeiten an der Oberfläche der Folien.

Von der WO 97/48742 werden locker aggregierte Katalysatorträgerzusammensetzungen offenbart, die eine Teilchengröße von 2 bis 250 µm und eine spezifische Oberfläche von 100 bis 1000 $m^2/g$ aufweisen, wobei die Trägerteilchen Teilchen mit einer mittleren Teilchengröße von weniger als 30 µm und einen Binder, der diese Teilchen locker aneinander bindet, enthalten. Die aus solchen Katalysatorträgern erhältlichen Polymerisationskatalysatoren weisen eine hohe Aktivität auf und führen zu homogenen Polymerisaten, aus denen sich Folien mit gutem Aussehen herstellen lassen.

Gegenstand der WO 97/48743 sind zerbrechliche, agglomerierte Katalysatorträgerteilchen mit einer mittleren Teilchengröße von 2 bis 250 µm und einer spezifischen Oberfläche von 1 bis 1000 $m^2/g$, die durch Sprühtrocknung von Primärpartikeln mit einer mittleren Teilchengröße von 3 bis 10 µm hergestellt werden. Das Charakteristische dieser agglomerierten Katalysatorträgerteilchen ist, daß mindestens 80 Vol.-% der agglomerierten Teilchen, die kleiner sind als der $D_{90}$-Wert der originalen Teilchengrößenverteilung, eine mikro-kugelförmige Morphologie besitzen. (Der $D_{90}$-Wert bedeutet, daß 90 Vol.-% der Teilchen einen kleineren Durchmesser aufweisen.) Die mikro-kugelförmigen agglomerierten Katalysatorträgerteilchen weisen zwischenräumliche Hohlräume mit einer gleichförmigen Größe und Verteilung innerhalb des Teilchens auf, wobei die Hohlräume zumindest teilweise die Teilchenoberfläche durchdringen und dadurch mindestens 10 Kanäle von der Oberfläche zum Inneren der agglomerierten Teilchen ausbilden. Auch die aus diesen Katalysatorträgern erhältlichen Polymerisationskatalysatoren weisen eine hohe Aktivität auf und es lassen sich Folien mit gutem Aussehen herstellen.

Die mit Polymerisationskatalysatoren entsprechend dem beschriebenen Stand der Technik hergestellten Polymerisate genügen zwar im Großen und Ganzen den Anforderung bezüglich der Folienqualität. Allerdings ist insbesondere im Vergleich mit Polymerisaten, die mit Katalysatorsystemen produziert wurden, die keine anorganischen Oxide als Träger enthalten, der Anteil an Mikrostippen bzw. störenden Verunreinigungen noch deutlich verbesserungswürdig.

Weiterhin ist es bei der Herstellung von Fasern aus Polymerisaten des Propylens aus wirtschaftlichen Gründen notwendig, die Standzeiten der Filter für flüssiges Polypropylen vor den Spindüsen deutlich zu verlängern. Diese liegen bei Polypropylen, das mit geträgerten Katalysatoren hergestellt wird, deutlich niedriger als bei einem solchen Polypropylen, das mit einem ungeträgerten Katalysator erhalten wird.

Die Vorteile bezüglich der Polymermorphologie, die durch die anorganischen Oxide bewirkt werden, sollten jedoch beibehalten werden. Außerdem besteht immer ein Bedürfnis, höhere Katalysatorproduktivitäten zu erzielen.

Der vorliegenden Erfindung lag daher die Aufgabe zugrunde, den geschilderten Nachteilen abzuhelfen und verbesserte Katalysatorsysteme vom Typ der Ziegler-Natta-Katalysatoren zu entwickeln, die eine deutlich verbesserte Produktivität aufweisen und mit denen Polymerisate von Alk-1-enen mit guter Morphologie und hoher Schüttdichte zugänglich sind, aus denen man u.a. Folien mit verringerter Neigung zur Mikrostippenbildung sowie Fasern mit weniger störenden Verunreinigung herstellen kann, was zu einer Anhebung der Standzeiten der Polymerschmelzfiltrationssiebe führt.

Demgemäß wurden die eingangs definierten Katalysatorsysteme gefunden, sowie das Verfahren zur Herstellung von Polymerisaten des Propylens, deren Verwendung zur Herstellung von Folien, Fasern oder Formkörpern sowie die Folien und Fasern oder Formkörper aus diesen Polymerisaten.

Die erfindungsgemäßen Katalysatorsysteme enthalten u.a. neben einer Feststoffkomponente a) noch einen Cokatalysator. Als Cokatalysator kommt dabei die Aluminiumverbindung b) in Frage. Vorzugsweise wird neben dieser Aluminiumverbindung b) als weiteren Bestandteil des Cokatalysators noch eine Elektronendonorverbindung c) eingesetzt.

Erfindungsgemäß wird zur Herstellung des Katalysatorsystems mindestens ein teilchenförmiges anorganisches Oxid verwendet, welches eine spezifische Oberfläche von 350 bis 1000 $m^2$/g, bevorzugt von 400 bis 700 $m^2$/g und insbesondere von 450 bis 600 $m^2$/g aufweist, wobei die Bestimmung der spezifischen Oberfläche durch Stickstoff-Adsorption nach DIN 66131 erfolgt.

Die erfindungsgemäß einzusetzenden anorganischen Oxide haben einen mittleren Teilchendurchmesser $\bar{D}$ von 5 bis 60 µm, bevorzugt von 15 bis 60 µm und insbesondere von 20 bis 60 µm. Unter dem mittleren Teilchendurchmesser $\bar{D}$ ist hierbei der volumenbezogene Mittelwert (Medianwert) der durch Coulter-Counter-Analyse nach ASTM Standard D 4438 bestimmten Korngrößenverteilung zu verstehen.

Die Teilchen der anorganischen Oxide sind aus Primärpartikeln zusammengesetzt, die einen mittleren Teilchendurchmesser d von 1 bis 10 µm, bevorzugt von 3 bis 10 µm und insbesondere von 4 bis 8 µm aufweisen. Bei den sogenannten Primärpartikeln handelt es sich um poröse, granuläre Oxidpartikel, welche im allgemeinen durch trockene und/oder feuchte Mahlung aus einem Hydrogel des anorganischen Oxids erhalten werden. Es ist auch möglich, die Primärpartikeln vor ihrer Weiterverarbeitung zu sieben.

Weiterhin sind die anorganischen Oxide dadurch charakterisiert, daß sie Hohlräume oder Kanäle mit einem Durchmesser größer 1 µm enthalten, deren makroskopischer Anteil an den Teilchen der anorganischen Oxide im Bereich von 5 bis 30 Vol.-%, insbesondere im Bereich von 10 bis 25 Vol.-%, liegt. Außerdem ist es vorteilhaft, wenn sie mindestens eine der folgenden Bedingungen erfüllen, daß

i) weniger als 10 Vol.-% und bevorzugt weniger als 8 Vol.-% der Primärpartikel einen Teilchendurchmesser d größer 15 µm haben oder

ii) weniger als 5 Vol.-% und bevorzugt weniger als 3 Vol.-% der Primärpartikel einen Teilchendurchmesser d größer 20 µm haben.

Die Bestimmung der mittleren Teilchendurchmesser $\bar{d}$ der Primärpartikel, der Verteilung der Teilchendurchmesser d der Primärpartikel sowie des makroskopischen Anteils der Hohlräume oder Kanäle mit einem Durchmesser größer 1 µm erfolgt hierbei durch Bildanalyse mit Hilfe der Rasterelektronenmikroskopie (Scanning Electron Microscopy) an Kornquerschnitten des anorganischen Oxids. Die Auswertung geschieht durch Überführung des elektronenmikroskopisch erhaltenen Graubilds in ein Binärbild und die digitale Auswertung mittels eines geeigneten EDV-Programms. Hierbei werden die Teilchen "elektronisch" fragmentiert, d.h. durch eine Folge mathematischer Operationen werden sich berührende Primärpartikel voneinander getrennt. Es ist nun möglich, die voneinander getrennten Partikel elektronisch nach Größe zu klassieren und zahlenmäßig zu erfassen. Damit erhält man eine exakte Partikelgrößenverteilung der Primärpartikel und die Anteile der grobkörnigen Primärpartikel im untersuchten teilchenförmigen anorganischen Oxid mit Teilchengrößen d größer 15 µm bzw. 20 µm. Zusätzlich kann man im Zug der analytischen Auswertung den exakten Anteil der Hohlräume oder Kanäle mit einem Durchmesser größer 15 µm bzw. 20 µm innerhalb der Teilchen bestimmen. Vorzugsweise werden mindestens 100 der aus Primärpartikeln zusammengesetzten Teilchen analysiert, um ein ausreichend großes Ensemble von Teilchen für eine reproduzierbar gute statistische Erfassung zu erhalten. Dies bedeutet, daß mitunter mehrere Schnittaufnahmen (rasterelektronenmikroskopische Bilder) herangezogen werden müssen.

Die anorganischen Oxide können beispielsweise durch Sprühtrockenen der vermahlenen Hydrogele, welche hierzu mit Wasser oder einem aliphatischen Alkohol vermischt werden, erhalten werden. Es ist möglich, daß beim Sprühtrocknen ein Binder eingesetzt.wird, der den Teilchenbildungsprozeß während des Sprühtrocknungsvorgangs fördert und/oder den Zusammenhalt der Primärpartikel in den Teilchen des anorganischen Oxids verbessert. Als Binder können besonders feine, z.B. kolloidal vorliegende, Partikel der anorganischen Oxide dienen. Es können aber auch Hilfsstoffe, beispielsweise Polymerisate wie Zellulosederivate, Polystyrol oder Polymethylmethacrylat, als Binder zugegeben werden. Die so erhaltenen Teilchen weisen in der Regel eine sphäroidische, d.h. kugelähnliche, Gestalt auf.

Als anorganische Oxide kommen vor allem die Oxide des Siliciums, des Aluminiums, des Titans, des Zirkoniums oder eines der Metalle der I. bzw. der II. Hauptgruppe des Periodensystems oder Mischungen solcher Oxide in Betracht. Bevorzugte Oxide sind beispielsweise Aluminiumoxid, Aluminiumphosphat, Magnesiumoxid oder Schichtsilikate. Besonders bevorzugt wird Siliciumoxid (Kieselgel) verwendet. Es können auch Mischoxide wie Aluminiumsilikate oder Magnesiumsilikate eingesetzt werden.

Die teilchenförmigen anorganischen Oxide weisen üblicherweise Porenvolumina von 0,1 bis 10 $cm^3$/g, bevorzugt von 1,0 bis 4,0 $cm^3$/g auf, wobei hier die durch Quecksilber-Porosimetrie nach DIN 66133 und durch Stickstoff-Adsorption nach DIN 66131 bestimmten Werte zu verstehen sind.

In Abhängigkeit des Herstellprozesses der teilchenförmigen anorganischen Oxide kann deren pH-Wert, d.h. der negative dekadische Logarithmus der Protonenkonzentration, verschiedene Werte annehmen. Vorzugsweise liegt er im Bereich von 3,0 bis 9,0, insbesondere im Bereich von 4,0 bis 7,5 und besonders bevorzugt im Bereich von 4,0 bis 7,0. Die Bestimmung des pH-Werts der teilchenförmigen anorganischen Oxide erfolgt in der Regel mittels der in S.R. Morrison, "The Chemical Physics of Surfaces", Plenum Press, New York [1977], Seite 130ff beschriebenen Methode.

Die anorganischen Oxide enthalten nach ihrer Herstellung auf ihrer Oberfläche häufig Hydroxylgruppen. Durch Wasserabspaltung ist es möglich, den Gehalt an OH-Gruppen zu reduzieren oder ganz zu beseitigen. Dies kann durch thermische oder chemische Behandlung erfolgen. Eine thermische Behandlung erfolgt üblicherweise durch Erhitzen des anorganischen Oxids für von 1 bis 24 Stunden, bevorzugt von 2 bis 20 Stunden und insbesondere von 3 bis 12 Stunden, auf Temperaturen von 250 bis 900°C, bevorzugt von 600 bis 800°C. Die Hydroxylgruppen können auch auf chemischem Weg durch Behandeln der anorganischen Oxide mit üblichen Trocknungsmitteln wie $SiCl_4$, Chlorsilanen oder Aluminiumalkylen entfernt werden. Bevorzugt eingesetzte anorganische Oxide enthalten von 0,5 bis 5 Gew-% Wasser. Der Wassergehalt wird üblicherweise dadurch bestimmt, daß man das anorganische Oxid bei 160 °C unter Normaldruck bis. zur Gewichtskonstanz trocknet. Die Gewichtsabnahme entspricht dem ursprünglichen Wassergehalt.

Die Feststoffkomponente a) enthält neben dem teilchenförmigen anorganischen Oxid als Träger u.a. Verbindungen des Titans oder des Vanadiums.

Als Titanverbindungen werden im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Beispiele für geeignete Titanverbindungen sind $TiBr_3$, $TiBr_4$, $TiCl_3$, $TiCl_4$, $Ti(OCH_3)Cl_3$, $Ti(OC_2H_5)Cl_3$, $Ti(O\text{-}iso\text{-}C_3H_7)Cl_3$, $Ti(O\text{-}n\text{-}C_4H_9)Cl_3$, $Ti(OC_2H_5)Br_3$, $Ti(O\text{-}n\text{-}C_4H_9)Br_3$, $Ti(OCH_3)_2Cl_2$, $Ti(OC_2H_5)_2Cl_2$, $Ti(O\text{-}n\text{-}C_4H_9)_2Cl_2$, $Ti(OC_2H_5)_2Br_2$, $Ti(OCH_3)_3Cl$, $Ti(OC_2H_5)_3Cl$, $Ti(O\text{-}n\text{-}C_4H_9)_3Cl$, $Ti(OC_2H_5)_3Br$, $Ti(OCH_3)_4$, $Ti(OC_2H_5)_4$ oder $Ti(O\text{-}n\text{-}C_4H_9)_4$. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid. Von den Vanadiumverbindungen sind insbesondere die Vanadiumhalogenide, die Vanadiumoxyhalogenide, die Vanadiumalkoxide und die Vanadiumacetylacetonate zu nennen. Bevorzugt sind die Vanadiumverbindungen der Oxidationsstufen 3 bis 5.

Bei der Herstellung der Feststoffkomponente a) wird bevorzugt zusätzlich noch mindestens eine Verbindung des Magnesiums eingesetzt. Als solche sind halogenhaltige Magnesiumverbindungen wie die Magnesiumhalogenide, und insbesondere die Chloride oder Bromide, oder Magnesiumverbindungen, aus denen die Magnesiumhalogenide in üblicher Weise z.B. durch Umsetzung mit Halogenierungsmitteln erhalten werden können, geeignet. Als Halogene werden hierbei Chlor, Brom, Jod oder Fluor oder Mischungen aus zwei oder mehr Halogenen verstanden, wobei Chlor oder Brom und insbesondere Chlor bevorzugt sind.

Als halogenhaltige Magnesiumverbindungen kommen vor allem die Magnesiumchloride oder Magnesiumbromide in Betracht. Magnesiumverbindungen, aus denen die Halogenide erhalten werden können, sind z.B. Magnesiumalkyle, Magnesiumaryle, Magnesiumalkoxy- oder Magnesiumaryloxyverbindungen oder Grignardverbindungen. Geeignete Halogenierungsmitteln sind beispielsweise Halogene, Halogenwasserstoffe, $SiCl_4$ oder $CCl_4$ und bevorzugt Chlor oder Chlorwasserstoff.

Beispiele für geeignete, halogenfreie Verbindungen des Magnesiums sind Diethylmagnesium, Di-n-propylmagnesium, Di-iso-propylmagnesium, Di-n-butylmagnesium, Di-sek.-butylmagnesium, Di-tert.-butylmagnesium, Diamylmagnesium, n-Butylethylmagnesium, n-Butylsek.-butylmagnesium, n-Butyloctylmagnesium, Diphenylmagnesium, Diethoxymagnesium, Di-n-propyloxymagnesium, Di-iso-propyloxymagnesium, Di-n-butyloxymagnesium, Di-sek.-butyloxymagnesium, Ditert.-butyloxymagnesium, Diamyloxymagnesium, n-Butyloxyethoxymagnesium, n-Butyloxy-sek.-butyloxymagnesium, n-Butyloxyoctyloxymagnesium oder Diphenoxymagnesium. Von diesen werden n-Butylethylmagnesium oder n-Butyloctylmagnesium bevorzugt eingesetzt.

Als Beispiele für Grignardverbindungen sind Methylmagnesiumchlorid, Ethylmagnesiumchlorid, Ethylmagnesiumbromid, Ethylmagnesiumjodid, n-Propylmagnesiumchlorid, n-Propylmagnesiumbromid, n-Butylmagnesiumchlorid, n-Butylmagnesiumbromid, sek.-Butylmagnesiumchlorid, sek.-Butylmagnesiumbromid, tert.-Butylmagnesiumchlorid, tert.-Butylmagnesiumbromid, Hexylmagnesiumchlorid, Octylmagnesiumchlorid, Amylmagnesiumchlorid, Isoamylmagnesiumchlorid, Phenylmagnesiumchlorid und Phenylmagnesiumbromid zu nennen.

Besonders bevorzugt werden als Magnesiumverbindungen außer Magnesiumdichlorid oder Magnesiumdibromid vor allem die Magnesiumdi-($C_1$-$C_{10}$-alkyl)-Verbindungen zur Herstellung der teilchenförmigen Feststoffe eingesetzt.

Bei der Herstellung der erfindungsgemäßen Katalysatorsysteme werden pro Mol des anorganischen Oxids 0,5 bis 2,0 mol, insbesondere von 0,5 bis 1,5 mol und besonders bevorzugt 0,5 bis 1,0 mol der Magnesiumverbindungen verwendet.

Es ist auch möglich, zusätzlich zu den Magnesiumverbindungen noch mindestens eine sogenannte interne Elektronendonorverbindung bei der Herstellung der teilchenförmigen Feststoffe einzusetzen. Beispiele für geeignete interne Elektronendonorverbindungen sind mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt sind Carbonsäurederivate und insbesondere Phthalsäurederivate der allgemeinen Formel (I)

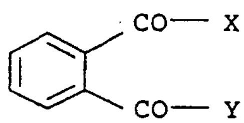

(I)

wobei X und Y jeweils für ein Chlor- oder Bromatom oder einen $C_1$-$C_{10}$-Alkoxyrest oder gemeinsam für Sauerstoff in Anhydridfunktion stehen. Besonders bevorzugte interne Elektronendonorverbindungen sind Phthalsäureester, wobei X und Y einen $C_1$-$C_8$-Alkoxyrest, beispielsweise einen Methoxy-, Ethoxy-, n-Propyloxy-, iso-Propyloxy- n-Butyloxy-, sek.-Butyloxy-, iso-Butyloxy- oder einen tert.-Butyloxyrest, bedeuten. Beispiele für vorzugsweise eingesetzte Phthalsäureester sind Diethylphthalat, Di-n-butylphthalat, Di-iso-butylphthalat, Di-n-pentylphthalat, Di-n-hexylphthalat, Di-n-heptylphthalat, Di-n-octylphthalat oder Di-2-ethylhexylphthalat.

Weiter bevorzugte interne Elektronendonorverbindungen sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise $C_1$-$C_{15}$-Alkanole oder $C_5$-$C_7$-Cycloalkanole, die ihrerseits eine oder mehrere $C_1$-$C_{10}$-Alkylgruppen tragen können, ferner $C_6$-$C_{10}$-Phenole.

Es können auch Mischungen verschiedener Elektronendonorverbindungen verwendet werden.

Falls interne Elektronendonorverbindungen bei der Herstellung der teilchenförmigen Feststoffe verwendet werden, kommen in der Regel pro Mol der Magnesiumverbindungen von 0,05 bis 2,0 mol, bevorzugt von 0,2 bis 0,5 mol, der Elektronendonorverbindungen zum Einsatz.

Bei der Herstellung der teilchenförmigen Feststoffe können ferner $C_1$-$C_8$-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz kommen, von denen Ethanol bevorzugt verwendet wird.

Die erfindungsgemäßen Katalysatorsysteme können nach an sich bekannten Methoden hergestellt werden.

Bevorzugt wird folgendes zweistufige Verfahren angewandt:

In der ersten Stufe versetzt man zunächst in einem inerten Lösungsmittel, bevorzugt einem flüssigen Alkan oder einem aromatischen Kohlenwasserstoff, z.B. Toluol oder Ethylbenzol, das anorganische Oxid mit einer Lösung der Magnesiumverbindung, wonach man dieses Gemisch von 0,5 bis 5 Stunden bei einer Temperatur von 10 bis 120°C in der Regel unter Rühren reagieren läßt. Anschließend fügt man, üblicherweise unter ständigem Rühren, ein Halogenierungsmittel wie Chlor oder Chlorwasserstoff im wenigstens zweifachen, bevorzugt im wenigstens fünffachen molaren Überschuß, bezogen auf die magnesiumhaltige Verbindung, hinzu, wobei man etwa 30 bis 120 Minuten reagieren läßt. Danach gibt man bei einer Temperatur von -20 bis 150°C das $C_1$-$C_8$-Alkanol sowie die Übergangsmetallverbindung, bevorzugt eine Titanverbindung, und die interne Elektronendonorverbindung, hinzu. Die Zugabe der Übergangsmetallverbindung und der internen Elektronendonorverbindung kann gleichzeitig mit dem $C_1$-$C_8$-Alkanol erfolgen, man kann jedoch auch zunächst das $C_1$-$C_8$-Alkanol etwa 10 bis 120 Minuten lang bei einer Temperatur von 0 bis 100°C

auf das Zwischenprodukt einwirken lassen. Man setzt pro Mol Magnesium von 1 bis 5 mol, bevorzugt von 1,6 bis 4 mol des $C_1$-$C_8$-Alkanols, von 1 bis 15 mol, bevorzugt von 2 bis 10 mol der Titanverbindung und von 0,01 bis 1 mol, bevorzugt von 0,2 bis 0,5 mol, der internen Elektronendonorverbindung ein. Dieses Gemisch läßt man wenigstens 10 Minuten, insbesondere wenigstens 30 Minuten bei einer Temperatur im Bereich von 10 bis 150°C, bevorzugt von 60 bis 130°C, im allgemeinen unter Rühren reagieren. Der so erhaltene feste Stoff wird anschließend abfiltriert und mit einem $C_7$-$C_{10}$-Alkylbenzol, bevorzugt mit Ethylbenzol, gewaschen.

In der zweiten Stufe extrahiert man den aus der ersten Stufe erhaltenen Feststoff bei Temperaturen im Bereich von 100 bis 150°C mit überschüssigem Titantetrachlorid oder einer im Überschuß vorliegenden Lösung von Titantetrachlorid in einem inerten Lösungsmittel, vorzugsweise einem $C_7$-$C_{10}$-Alkylbenzol, wobei das Lösungsmittel wenigstens 5 Gew.-% Titantetrachlorid enthält. Die Extraktion wird in der Regel wenigstens 30 Minuten lang durchgeführt. Danach wäscht man das Produkt solange mit einem flüssigen Alkan, bis der Gehalt der Waschflüssigkeit an Titantetrachlorid weniger als 2 Gew.-% beträgt.

Die Feststoffkomponente a) weist bevorzugt ein molares Verhältnis des anorganischen Oxids zu der Verbindung des Titans oder des Vanadiums im Bereich von 1000 bis 1, insbesondere im Bereich von 100 bis 2, und besonders bevorzugt von 50 bis 3 auf.

Ein Vorteil der erfindungsgemäßen Katalysatorsysteme liegt darin, daß Folien aus Polymerisaten von Alk-1-enen, die mit diesen Katalysatorsystemen hergestellt wurden, weniger Mikrostippen aufweisen, sowie bei daraus erhaltenen Faserprodukten man eine Absenkung störender Verunreinigungen beobachtet,was eine Anhebung der Standzeiten der Polymerschmelzfiltrationssiebe zur Folge hat. Dies ist jedoch nicht mit einer Abnahme der Katalysatorproduktivität verbunden, sondern es wird sogar eine gesteigerte Produktivität beobachtet. Bezüglich der Folienqualität nimmt man an, daß die Mikrostippen zumindest teilweise von nicht fragmentierten, großen Feststoffanteilen hervorgerufen werden. Also sollte es möglich sein, durch Reduktion der mittleren Teilchengröße d der Primärpartikel die Mikrostippenzahl zu reduzieren. Tatsächlich weisen Feststoffe aus ausschließlich sehr kleinen Primärpartikeln und einem hohen kolloidalen Anteil an organischem Oxid aber eine hohe Packungsdichte auf, die eine Immobilisierung der Aktivkomponente durch fehlende Poren und Kanäle verhindert und es wird sowohl ein Anstieg der Mikrostippen als auch eine Abnahme der Katalysatorproduktivität beobachtet.

Durch die Verwendung poröser anorganischer Oxide mit den vorstehend beschriebenen Eigenschaften kann die Immobilisierungskapazität der Aktivkomponenten,d.h. des Magnesiumchlorids, der Titanverbindung und des Elektronendonors, stark gesteigert werden, was zur Folge hat, daß die Aktivkomponenten homogener über die anorganische Oxidmatrix verteilt sind und der Anteil an anorganischem Oxid am Gesamtanteil der teilchenförmigen Feststoffkomponente a) abgesenkt werden kann.

Desweiteren kann bei Verwendung anorganischer Oxide mit abgesenktem mittleren Teilchendurchmesser (des Agglomerats) eine weitere deutliche Verbesserung der Immobilisierungskapazität der Aktivkomponenten und damit eine Erhöhung der Produktivität im Vergleich zu einem anorganischen Oxid mit gleicher Primärpartikelverteilung und gleichem morphologischen Aufbau aber größerem mittleren Teilchendurchmesser (des Agglomerats) erreicht werden.

Die erfindungsgemäßen Katalysatorsysteme lassen sich insbesondere zur Polymerisation von Alk-1-enen einsetzen. Zu den Alk-1-enen gehören u.a. lineare oder verzweigte $C_2$-$C_{10}$-Alk-1-ene, insbesondere lineare $C_2$-$C_{10}$-Alk-1-ene wie Ethylen, Propylen, But-1-en, Pent-1-en, Hex-1-en, Hept-1-en, Oct-1-en, Non-1-en, Dec-1-en oder 4-Methyl-pent-1-en. Es können auch Gemische aus diesen Alk-1-enen polymerisiert werden.

Die erfindungsgemäßen Katalysatorsysteme enthalten neben der Feststoffkomponente a) noch wenigstens einen Cokatalysator. Als Cokatalysator kommt dabei die Aluminiumverbindung b) in Frage. Vorzugsweise wird neben dieser Aluminiumverbindung b) als weiterer Cokatalysator noch eine externe Elektronendonorverbindung c) eingesetzt.

Geeignete Aluminiumverbindungen b) sind außer Trialkylaluminium auch solche, hiervon abgeleitete Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben den Aluminiumverbindungen b) kann man als weiteren Cokatalysator externe Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen verwenden, wobei die externen Elektronendonorverbindungen c) gleich oder verschieden von den zur Herstellung des Katalysatorfeststoffs a) eingesetzten internen Elektronendonorverbindungen sein können.

Bevorzugte externe Elektronendonorverbindungen c) sind dabei siliciumorganische Verbindungen der allgemeinen Formel (II)

$$R^1{}_nSi(OR^2)_{4-n} \quad (II)$$

wobei $R^1$ gleich oder verschieden ist und eine $C_1$-$C_{20}$-Alkylgruppe, eine 5- bis 7-gliedrige Cycloalkylgruppe, die ihrerseits durch $C_1$-$C_{10}$-Alkyl substituiert sein kann, eine $C_6$-$C_{18}$-Arylgruppe oder eine $C_6$-$C_{18}$-Aryl-$C_1$-$C_{10}$-alkylgruppe bedeutet, $R^2$ gleich oder verschieden ist und eine $C_1$-$C_{20}$-Alkylgruppe bezeichnet und n für die ganzen Zahlen 1, 2 oder 3 steht. Besonders bevorzugt werden solche Verbindungen, in denen $R^1$ eine $C_1$-$C_8$-Alkylgruppe oder eine 5- bis 7-gliedrige Cycloalkylgruppe sowie $R^2$ eine $C_1$-$C_4$-Alkylgruppe bedeutet und n für die Zahlen 1 oder 2 steht.

Unter diesen Verbindungen sind insbesondere Diisopropyldimethoxysilan, Isobutylisopropyldimethoxysilan, Diisobutyldimethoxysilan, Dicyclopentyldimethoxysilan, Dicyclohexyldimethoxysilan, Cyclohexylmethyldimethoxysilan, Isopropyl-tert.-butyldimethoxysilan, Isobutyl-sek.-butyldimethoxysilan und Isopropyl-sek.-butyldimethoxysilan hervorzuheben.

Die als Cokatalysatoren wirkenden Verbindungen b) und c) kann man sowohl einzeln, nacheinander in beliebiger Reihenfolge oder zusammen als Gemisch auf den Katalysatorfeststoff a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) in einer solchen Menge eingesetzt, daß das Atomverhältnis zwischen Aluminium aus der Aluminiumverbindung b) und dem Übergangsmetall aus dem Katalysatorfeststoff a) von 10:1 bis 800:1, insbesondere von 20:1 bis 200:1 beträgt.

Die Katalysatorsysteme, enthaltend einen Katalysatorfeststoff a) und als Cokatalysatoren mindestens eine Aluminiumverbindung b) oder mindestens eine Aluminiumverbindung b) und mindestens eine weitere Elektronendonorverbindungen c), eignen sich hervorragend zur Herstellung von Propylenpolymerisaten, und zwar sowohl von Homopolymerisaten des Propylens als auch von Copolymerisaten des Propylens mit einem oder mehreren anderen Alk-1-enen mit bis zu 10 C-Atomen. Unter den Copolymerisaten sollen hierbei sowohl solche verstanden werden, die die anderen Alk-1-ene mit bis zu 10 C-Atomen statistisch eingebaut enthalten. Dann beträgt der Comonomergehalt in der Regel weniger als 15 Gew.-%. Es ist auch möglich, daß die Propylencopolymerisate in Form sogenannter Block- oder Impactcopolymerisate vorliegen. Diese enthalten in der Regel zumindest eine Matrix eines Propylenhomopolymerisats oder eines statistischen Propylencopolymerisats mit weniger als 15 Gew.-% anderer Alk-1-ene mit bis zu 10 C-Atomen und eine Weichphase aus einem Propylencopolymerisat mit 15 bis 80 Gew-% einpolymerisierter anderer Alk-1-ene mit bis zu 10 C-Atomen. Bevorzugte Comonomere sind jeweils Ethylen oder But-1-en. Es kommen aber auch Gemische von Comonomeren in Betracht, so daß beispielsweise Terpolymerisate des Propylens erhalten werden.

Die Herstellung der Propylenpolymerisate kann in den üblichen, für die Polymerisation von Alk-1-enen geeigneten Reaktoren entweder batchweise oder bevorzugt kontinuierlich u.a. in Lösung, als Suspensionspolymerisation oder als Gasphasenpolymerisation durchgeführt werden. Geeignete Reaktoren sind beispielsweise kontinuierlich betriebene Rührreaktoren, Schleifenreaktoren, Wirbelbettreaktoren oder horizontal oder vertikal gerührte Pulverbettreaktoren. Selbstverständlich kann die Reaktion auch in einer Reihe von mehreren, hintereinander geschalteten Reaktoren erfolgen. Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Die Polymerisation wird in der Regel bei einer Temperatur von 20 bis 150°C, bevorzugt von 50 bis 120°C und insbesondere von 60 bis 90°C, und einem Druck von 1 bis 100 bar, bevorzugt von 15 bis 40 bar und insbesondere 20 bis 35 bar, durchgeführt.

Die Molmasse der dabei gebildeten Propylenpolymerisate kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgase wie Stickstoff oder Argon und kleinere Mengen Polypropylenpulver mitzuverwenden.

Die mittleren Molmassen (Gewichtsmittel) der Propylenpolymerisate liegen in der Regel im Bereich von 10 000 bis 1 000 000 g/mol und die Schmelze-Fließraten (MFR) im Bereich von 0,1 bis 100 g/10 min, vorzugsweise von 0,5 bis 50 g/10 min. Die Schmelze-Fließrate entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird.

Die erfindungsgemäßen Katalysatorsysteme zeichnen sich gegenüber bisher bekannten Katalysatorsystemen dadurch aus, daß sie die Herstellung von Polymerisaten aus Alk-1-en mit einer guten Morphologie und hoher Schüttdichte ermöglichen und die Polymerisate bei der Folienherstellung deutlich weniger zur Mikrostippenbildung neigen. Weiterhin bewirken sie eine Absenkung des Druckanstieges bei der Schmelzfiltration. Außerdem ist die Produktivität der erfindungsgemäßen Katalysatorsysteme erhöht.

Aufgrund ihrer guten mechanischen Eigenschaften eignen sich die mit den erfindungsgemäßen teilchenförmigen Feststoffen erhältlichen Polymerisate, und insbesondere die erhältlichen Homopolymerisate des Propylens oder

Copolymerisate des Propylens mit einem oder mehreren anderen Alk-1-enen mit bis zu 10 C-Atomen, für die Herstellung von Folien, Fasern oder Formkörpern und vor allem zur Herstellung von Folien.

Beispiele

Zur Charakterisierung der Produkte wurden folgende Prüfungen durchgeführt:

Bestimmung des mittleren Teilchendurchmessers D:

Zur Bestimmung des mittleren Teilchendurchmessers $\bar{D}$ der Kieselgele wurde durch Coulter-Counter-Analyse nach ASTM Standard D 4438 die Korngrößenverteilung der Kieselgelpartikel ermittelt und daraus der volumenbezogene Mittelwert (Medianwert) berechnet.

Bestimmung des mittleren Teilchendurchmesser $\bar{d}$ der Primärpartikel, der Verteilung der Teilchendurchmesser d der Primärpartikel und des makroskopischen Anteils der Hohlräume oder Kanäle mit einem Durchmesser größer 1 µm :

Die Bestimmung des mittleren Teilchendurchmesser der Primärpartikel, der Verteilung der Teilchendurchmesser d der Primärpartikel sowie des makroskopischen Anteils der Hohlräume oder Kanäle mit einem Durchmesser größer 1 µm der verwendeten Kieselgele geschah mit Hilfe der Rasterelektronenmikroskopie (Scanning Electron Microscopy) jeweils an Kornquerschnitten der Kieselgele. Die erhaltenen elektronenmikroskopischen Aufnahmen wurden in ein Binärbild überführt und mittels des Software-Pakets Analysis der Fa. SIS wurden die Teilchen "elektronisch" fragmentiert. Die voneinander getrennten Partikel wurden elektronisch nach Größe klassiert und zahlenmäßig erfaßt. Aus jeweils etwa 200 Teilchen wurde die Partikelgrößenverteilung der Primärpartikel berechnet, aus der der mittlere Teilchendurchmesser $\bar{d}$, der Anteil mit Teilchengrößen d größer 20 µm, der Anteil mit Teilchengrößen d größer 15 µm und der Anteil der Primärpartikel mit Teilchengrößen d kleiner 5 µm abgeleitet wurde. Zusätzlich wurde der exakte Anteil der Hohlräume oder Kanäle mit einem Durchmesser größer 1 µm innerhalb der Teilchen bestimmt.

Bestimmung der spezifischen Oberfläche:

Durch Stickstoff-Adsorption nach DIN 66131

Bestimmung des Porenvolumens:

Durch Quecksilber-Porosimetrie nach DIN 66133

Bestimmung des pH-Werts:

Der pH-Wert des Kieselgels wurde mit Hilfe der in S.R. Morrison, "The Chemical Physics of Surfaces", Plenum Press, New York [1977], Seite 130ff beschriebenen Methode ermittelt.

Bestimmung des Wassergehalts:

Zur Bestimmung des Wassergehalts wurden 5 g Kieselgel bei 160°C unter Normaldruck 120 min getrocknet (Gewichtskonstanz). Die Gewichtsabnahme entspricht dem ursprünglichen Wassergehalt.

Bestimmung der Produktivität:

Die Produktivität ist die Menge an Polymerisat in Gramm, die pro Gramm eingesetzter titanhaltiger Feststoffkomponente a) erhalten wurde.

Bestimmung des Schmelze-Fließrate (MFR):

nach ISO-Norm 1133, bei 230°C und unter einem Gewicht von 2,16 kg.

Bestimmung der Anzahl der Mikrostippen

Die Bestimmung der Anzahl der Mikrostippen pro Flächeneinheit erfolgte optisch online bei der Folienherstellung mittels einer Brabender-CCD-Kamera.

Bestimmung des Druckanstiegs der Schmelzfiltration

Die Bestimmung des Druckanstiegs bei der Schmelzfiltration erfolgt durch Extrusion der Polypropylenprodukte in einem Standard Laborextruder (3 Zonenschnecke) bei 265°C durch eine Metallfilterronde mit Stützgewebe mit einer Maschenweite von 5 µm bei einer Durchsatzrate von 2 kg/h. Der Druckanstieg bei gleicher Polyproylen Durchsatzrate wird dabei über die Zeit aufgenommen.

Beispiel 1

1. Herstellung des Katalysatorfeststoffs

Es wurde als anorganisches teilchenförmiges Oxid ein sphäroidisches Kieselgel ($SiO_2$) mit einem mittleren Teilchendurchmesser $\bar{D}$ von 60 µm und einem Anteil an Hohlräume oder Kanäle mit einem Durchmesser größer 1 µm von 17,4 Vol.-% verwendet. Der mittlere Teilchendurchmesser $\bar{d}$ der Primärpartikel betrug 6,1 µm. Die Primärpartikel wiesen eine enge Teilchengrößenverteilung auf, was sich darin äußerte, daß der Anteil mit einem Teilchendurchmesser d größer 15 µm nur 7,8 Vol.-%, mit einem Teilchendurchmesser d größer 20 µm nur 2,2 Vol.-% und mit einem Teilchendurchmesser d kleiner 5 µm nur 38 Vol.-% betrug. Das Kieselgel war weiterhin dadurch charakterisiert, daß es eine spezifische Oberfläche von 505 $m^2$/g, ein Porenvolumen von 1,8 $cm^3$/g, einen pH-Wert von 5,5 und einen Wassergehalt von 2,1 Gew.-% aufwies.

Das Kieselgel wurde mit einer Lösung von n-Butyloctylmagnesium in einem Gemisch aus n-Heptan und Ethylbenzol (Heptananteil: 33%) versetzt, wobei pro Mol $SiO_2$ 0,5 Mol der Magnesiumverbindung eingesetzt wurden. Die Lösung wurde 30 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 2,5 mol Ethanol pro Mol Magnesium versetzt. Dieses Gemisch wurde 0,5 Stunden bei 80°C gerührt und anschließend mit 6,0 mol Titantetrachlorid und 0,45 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die so hergestellte Katalysatorfeststoffs a) enthielt

4,1 Gew.-% Ti
8,3 Gew.-% Mg
33,4 Gew.-% Cl.

1.2 Polymerisation

In einem vertikal gerührten Gasphasenreaktor mit einem Nutzvolumen von 800 l wurde in Anwesenheit von Wasserstoff als Molmassenregler eine Propylenpolymerisation durchgeführt. Der Reaktor enthielt ein bewegtes Festbett aus feinteiligem Polymerisat. Der Reaktorausstoß an Polymerisat betrug 150 kg Polypropylen pro Stunde.

In den Gasphasenreaktor wurde bei einem Druck von 32 bar und bei einer Temperatur von 80°C gasförmiges Propylen eingeleitet. Bei einer mittleren Verweilzeit von 1,5 Stunden wurde mit Hilfe des unter 1.1 beschriebenen Katalysatorfeststoffs a) kontinuierlich polymerisiert, wobei pro Stunde 6,5 g des Katalysatorfeststoffs a), 300 mmol Triethylaluminium b) und 7,5 mmol Isobutylisopropyldimethoxysilan c) als Cokatalysator verwendet wurden. Es wurde eine Produktivität bezogen auf den Katalysatorfeststoff a) von 24000 g Polypropylen/g Feststoffkomponente erreicht.

Nach Beendigung der Gasphasenpolymerisation erhielt man ein Propylenhomopolymerisat mit einer Schmelze-Fließrate (MFR) von 10 g/10 min.

1.3 Herstellung einer Breitschlitzfolie

Mit dem unter 1.2 erhaltenen Propylenhomopolymerisat wurde mittels eines Einschnecken-Extruders bei einer Schmelzetemperatur von 190°C mit einem Durchsatz von 2,5 kg/h eine 40 µm dicke Breitschlitzfolie hergestellt. Die erhaltene Folie wies 760 Mikrostippen pro $m^2$ auf.

Beispiel 2

Die Präparation des Katalysatorfeststoffes a) erfolgt nach dem gleichen Schema wie unter Beispiel 1, nur das der mittlere Teilchendurchmesser des verwendeten Kieselgels 45 µm, der makroskopische Anteil von Poren und Kanälen mit einem Durchmesser größer als 1 µm 16,3 Vol. -%, der mittlere Teilchendurchmesser der Primärpartikel 6,3 µm, der Anteil an Primärpartikeln mit einem Teilchendurchmesser d größer 20 bzw. 15 µm 1,5 % bzw. 5,4 % beträgt. Der Anteil von Primärpartikeln mit einem Teilchendurchmesser d kleiner 5 µm beträgt 43 Vol.-%. Ferner weißt das Kieselgel eine spezifische Oberfläche von 521 $m^2/g$ (BET), ein Porenvolumen von 1,69 ml/g, einen pH-Wert von 5,5 und einen Wassergehalt von 2,1 Gew.-% auf. Pro Mol Kieselgel wurden 0,67 mol der Magnesiumverbindung eingesetzt.
Der so hergestellte Katalysatorfeststoff a) enthielt:

4,1 Gew.-% Ti
10,0 Gew.-% Mg
36,7 Gew. -% Cl

Die Polymerisation des Propylens erfolgte auf die gleiche Weise, wie im Abschnitt 1.2 des Beispiels 1 beschrieben.

Beispiel 3

Die Präparation des Katalysatorfeststoffes a) erfolgt nach dem gleichen Schema wie unter Beispiel 1, nur daß der mittlere Teilchendurchmesser des verwendeten Kieselgels 20 µm, der makroskopische Anteil von Poren und Kanälen mit einem Durchmesser größer als 1 µm 16,9 Vol.-%, der mittlere Teilchendurchmesser der Primärpartikel 4,2 µm, der Anteil an Primärpartikeln mit einem Teilchendurchmesser d größer 20 bzw. 15 µm 0,8 % bzw. 4,3 % beträgt. Der Anteil von Primärpartikeln mit einem Teilchendurchmesser d kleiner 5 µm beträgt 64 Vol. -%. Ferner weißt das Kieselgel eine spezifische Oberfläche von 495 $m^2/g$ (BET), ein Porenvolumen von 1,74 mg/g, einen pH-Wert von 5,5 und einen Wassergehalt von 2,1 Gew.-% auf.
Pro Mol Kieselgel wurden 1,0 mol der Magnesiumverbindung eingesetzt.
Der so hergestellte Katalysatorfeststoff a) enthielt:

3,8 Gew.-% Ti
10,9 Gew.-% Mg
40,6 Gew.-% Cl

Die Polymerisation des Propylens erfolgte auf die gleiche Weise, wie im Abschnitt 1.2 des Beispiels 1 beschrieben.

Vergleichsbeispiel A

Die Präparation des Katalysatorfeststoffes a) erfolgt nach dem gleichen Schema wie unter Beispiel 1, nur daß der mittlere Teilchendurchmesser des verwendeten Kieselgels 45 µm, der makroskopische Anteil von Poren und Kanälen mit einem Durchmesser größer als 1 µm 6,7 Vol. -%, der mittlere Teilchendurchmesser der Primärpartikel 8,5 µm, der Anteil an Primärpartikeln mit einem Teilchendurchmesser d größer 20 bzw. 15 µm 7,7 % bzw. 17,4 % beträgt. Der Anteil von Primärpartikeln mit einem Teilchendurchmesser d kleiner 5 µm beträgt 15,4 Vol.-%. Ferner weist das Kieselgel eine spezifische Oberfläche von 309 $m^2/g$ (BET), ein Porenvolumen von 1,36 ml/g, einen pH-Wert von 5,9 und einen Wassergehalt von 2,3 Gew.-% auf.
Pro Mol Kieselgel wurden 0,37 mol der Magnesiumverbindung eingesetzt.
Der so hergestellte Katalysatorfeststoff a) enthielt:

3,5 Gew.-% Ti
7,5 Gew.-% Mg
28,4 4 Gew. - % Cl

Die Polymerisation des Propylens erfolgte auf die gleiche Weise, wie im Abschnitt 1.2 des Beispiels 1 beschrieben.

Vergleichsbeispiel B

Die Präparation des Katalysatorfeststoffes a) erfolgt nach dem gleichen Schema wie unter Beispiel 1, nur daß der mittlere Teilchendurchmesser des verwendeten Kieselgels 80 µm, der makroskopische Anteil von Poren und Kanälen mit einem Durchmesser größer als 1 µm 18,3 Vol.-%, der mittlere Teilchendurchmesser der Primärpartikel 7,1 µm, der Anteil an Primärpartikeln mit einem Durchmesser d größer 20 bzw. 15 µm 2,5 % bzw. 9,1 % beträgt. Der Anteil von Primärpartikeln mit einem Teilchendurchmesser d kleiner 5 µm beträgt 27 Vol.-%. Ferner weißt das Kieselgel eine spezifische Oberfläche von 516 $m^2/g$ (BET), ein Porenvolumen von 1,69 ml/g, einen pH-Wert von 5,5 und einen Wassergehalt von 2,1 Gew. -% auf.
Pro Mol Kieselgel wurden 0,5 mol der Magnesiumverbindung eingesetzt.
Der so hergestellte Katalysatorfeststoff a) enthielt:

3,4 Gew.-% Ti
8,0 Gew. -% Mg
34,7 Gew. -% Cl

Die Polymerisation des Propylens erfolgte auf die gleiche Weise, wie im Abschnitt 1.2 des Beispiels 1 beschrieben.
Die Ergebnisse der Messungen am Propylenhomopolymerisat, das in den Beispielen 1 bis 3 sowie in den Vergleichsbeispielen A und B erhalten wurde, sind in der nachfolgenden Tabelle aufgeführt.

| | Beispiel 1 | Beispiel 2 | Beispiel 3 | Vergleichsbeispiel A | Vergleichsbeispiel B |
|---|---|---|---|---|---|
| Mittl. Teilchendurchmesser ($\bar{D}$) [µm] | 60 | 45 | 20 | 45 | 80 |
| Verhältnis $Mg/SiO_2$ [mol/mol] (max.) | 0,5 | 0,67 | 1,0 | 0,37 | 0,5 |
| Spez. Oberfläche (BET) [$m^2/g$] | 505 | 521 | 495 | 309 | 516 |
| Anteil Kanäle und Poren >1 µm (Vol.-%) | 17,4 | 16,3 | 16,9 | 6,7 | 18,3 |
| Mittl. Primärpartikeldurchmesser ($\bar{d}$) [µm] | 6,1 | 6,3 | 4,2 | 8,5 | 7,1 |
| Anteil $\bar{D}$ >20 µm (Vol.-%) | 2,2 | 1,5 | 0,8 | 7,7 | 2,5 |
| Anteil $\bar{D}$ >15 µm (Vol.-%) | 7,8 | 5,4 | 4,3 | 17,4 | 9,1 |
| Anteil $\bar{D}$ <5 µm (Vol.-%) | 38 | 43 | 64 | 15,4 | 27 |
| Produktivität [g PP/g Katfeststoff] | 24.000 | 27.000 | 29.000 | 18.000 | 22.000 |
| Schmelzflußrate MFR [g/10 min] | 10 | 10 | 9,3 | 12 | 12 |
| Anzahl Mikrostippen [pro $m^2$] | 760 | 530 | 360 | 4995 | 970 |
| Druckanstieg Schmelzefiltration [bar/kg PP] | 20 | 13 | 5 | 34 | 22 |

Die in den Beispielen 1 bis 3 verwendeten Kieselgele weisen eine vergleichbare Morphologie bezüglich der Zusammensetzung und der Primärpartikelverteilung unter Berücksichtigung der verschiedenen Agglomeratdurchmesser auf. Spezifische Oberflächen sowie der makroskopische Anteil der Poren und Kanäle mit einem Durchmesser von mehr als 1 µm liegen alle in demselben Bereich, so daß bei den Beispielen 1,2 und 3 der Größeneffekt der Agglomerate besonders deutlich wird. Die Beladungskapazität des Kieselgels mit Aktivkomponente wird in den Beispielen 1,2 und 3 bis an die Maximalgrenze ausgenutzt. Hier wird deutlich, daß mit sinkendem Agglomeratdurchmesser unterhalb von

60 μm das Verhältnis an Magnesiumverbindung (= Teil der Aktivkomponente) zu Kieselgelträgeranteil deutlich gesteigert werden kann, was sich in einem signifikanten Anstieg der Produktivität bei der Polymerisation von Propylen bemerkbar macht. Darüber hinaus kann durch die verbesserte Wärmeableitung (Verhältnis Oberfläche zu Volumen steigt bei sinkendem Agglomeratdurchmesser) der Polymerisationsenthalpie der Katalysator seine Produktivität über den Polymerisationszeitraum besser aufrechterhalten.

Ein weiterer positiver Effekt eines kleineren Agglomeratdurchmessers und einer gesteigerten Beladung wird in der Verringerung der Anzahl an Mikrostippen und beim Vergleich der Druckanstiege bei der Schmelzefiltration deutlich (ein hoher Wert des Druckanstiegs bedeutet hier eine schlechtere Qualität des Polymerisationsprodukts).

Aus einem Vergleich zwischen den erfindungsgemäßen Beispielen 1 bis 3 und den Vergleichsbeispielen A und B geht u.a. hervor, daß sich das erfindungsgemäße Katalysatorsystem durch eine erhöhte Produktivität gegenüber den Katalysatorsystemen des Standes der Technik auszeichnet. Die aus den Beispielen 1 bis 3 resultierenden Propylenhomopolymerisate weisen überdies stark verringerte Mikrostippen auf, was für die Herstellung von Folien sehr günstig ist. Für die Qualität des erhaltenen Propylenhomopolymerisats in den erfindungsgemäßen Beispielen 1 bis 3 spricht auch der relativ geringe Druckanstieg bei der Schmelzefiltration, was sich bei der Herstellung von Faserprodukten positiv bemerkbar macht.

## Patentansprüche

**1.** Katalysatorsysteme vom Typ der Ziegler-Natta-Katalysatoren, enthaltend als aktive Bestandteile

a) eine Feststoffkomponente, enthaltend eine Verbindung des Titans oder des Vanadiums, eine Verbindung des Magnesiums, ein teilchenförmiges anorganisches Oxid als Träger und eine interne Elektronendonorverbindung,
sowie als Cokatalysator

b) eine Aluminiumverbindung und

c) gegebenenfalls eine weitere, externe Elektronendonorverbindung,

wobei das verwendete teilchenförmige, anorganische Oxid eine spezifische Oberfläche von 350 bis 1000 $m^2/g$ und einen mittleren Teilchendurchmesser $\bar{D}$ im Bereich von 5 bis 60 μm aufweist und aus Teilchen besteht, die sich aus Primärpartikeln mit einem mittleren Teilchendurchmesser $\bar{d}$ im Bereich von 1 bis 10 μm zusammensetzen und die zwischen den Primärpartikeln Hohlräume oder Kanäle enthalten, wobei der makroskopische Anteil der Hohlräume oder Kanäle mit einem Durchmesser größer 1 μm an den Teilchen der anorganischen Oxide im Bereich von 5 bis 30 Vol.-% liegt und wobei das molare Verhältnis zwischen der Verbindung des Magnesiums und dem teilchenförmigen, anorganischen Oxid 0,5:1 bis 2,0:1 beträgt.

**2.** Katalysatorsysteme nach Anspruch 1, wobei das verwendete teilchenförmige anorganische Oxid zusätzlich mindestens eine der folgenden Bedingungen erfüllt, daß

(I) entweder weniger als 10 Vol.-% der Primärpartikel einen Teilchendurchmesser d von mehr als 15 μm haben oder

(II) daß weniger als 5 Vol.-% der Primärpartikel einen Teilchendurchmesser d von mehr als 20 μm haben.

**3.** Katalysatorsysteme nach einem der Ansprüche 1 oder 2, wobei die teilchenförmigen anorganischen Oxide durch Sprühtrocknen erhalten werden.

**4.** Katalysatorsysteme nach einem der Ansprüche 1 bis 3, wobei die teilchenförmigen,anorganischen Oxide Oxide des Siliciums, des Aluminiums, des Titans oder Oxide eines Metalls der I. oder der II. Hauptgruppe des Periodensystems oder Mischungen solcher Oxide sind.

**5.** Katalysatorsysteme nach einem der Ansprüche 1 bis 4, wobei als interne Elektronendonorverbindung ein Carbonsäureester verwendet wird.

**6.** Katalysatorsysteme nach einem der Ansprüche 1 bis 5, wobei als externe Elektronendonorverbindung c) eine siliciumorganische Verbindung verwendet wird.

**7.** Katalysatorsysteme nach einem der Ansprüche 1 bis 6, wobei als Aluminiumverbindung b) ein Trialkylaluminium verwendet wird.

**8.** Verfahren zur Herstellung von Homopolymerisaten des Propylens oder von Copolymerisaten des Propylens mit einem oder mehreren anderen Alk-1-enen mit bis zu 10 C-Atomen, **dadurch gekennzeichnet, daß** man die Polymerisation in Gegenwart eines Katalysatorsystems gemäß einem der Ansprüche 1 bis 7 durchführt.

## Claims

**1.** A catalyst system of the Ziegler-Natta type comprising as active constituents

a) a solid component comprising a compound of titanium or vanadium, a compound of magnesium, a particulate inorganic oxide as support and an internal electron donor compound,
and as cocatalyst

b) an aluminum compound and

c) if desired, a further, external electron donor compound,

wherein the particulate, inorganic oxide used has a specific surface area of from 350 to 1000 $m^2/g$ and a mean particle diameter $\bar{D}$ in the range from 5 to 60 μm and comprises particles which are composed of primary particles having a mean particle diameter $\bar{d}$ in the range from 1 to 10 μm and contain voids or channels between the primary particles, where the macroscopic proportion of voids or channels having a diameter of greater than 1 μm in the particles of the inorganic oxides is in the range from 5 to 30% by volume and the molar ratio of the compound of magnesium to the particulate, inorganic oxide is from 0.5:1 to 2.0:1.

**2.** A catalyst system as claimed in claim 1, wherein the particulate inorganic oxide used additionally meets at least one of the following conditions:

(I) less than 10% by volume of the primary particles have a particle diameter d of more than 15 μm or

(II) less than 5% by volume of the primary particles have a particle diameter d of more than 20 μm.

**3.** A catalyst system as claimed in claim 1 or 2, wherein the particulate inorganic oxide is obtained by spray drying.

**4.** A catalyst system as claimed in any of claims 1 to 3, wherein the particulate, inorganic oxide is an oxide of silicon, aluminum, or titanium or an oxide of a metal of main group I or II of the Periodic Table or a mixture of such oxides.

**5.** A catalyst system as claimed in any of claims 1 to 4, wherein the internal electron donor compound used is a carboxylic ester.

**6.** A catalyst system as claimed in any of claims 1 to 5, wherein an organosilicon compound is used as external electron donor compound c).

**7.** A catalyst system as claimed in any of claims 1 to 6, wherein the aluminum compound b) used is a trialkylaluminum.

**8.** A process for preparing homopolymers of propylene or copolymers of propylene with one or more other 1-alkenes having up to 10 carbon atoms, wherein the polymerization is carried out in the presence of a catalyst system as claimed in any of claims 1 to 7.

## Revendications

**1.** Système catalytique du type des catalyseurs Ziegler-Natta comprenant, en tant que constituants actifs :

a) un composé du titane ou du vanadium, un composé du magnésium, un oxyde anorganique formé de petites particules formant le support et un composé électro-donneur interne,

ainsi qu'en tant que co-catalyseur :
b) un composé d'aluminium, et
c) éventuellement un autre composé électro-donneur externe,

dans lesquels l'oxyde anorganique formé de petites particules utilisé présente une aire spécifique de 350 $mm^2/g$ et un diamètre de particules moyen D de l'ordre de 5 à 60 µm et est formé de particules qui sont constituées de particules primaires présentant un diamètre de particules moyen d de l'ordre de 1 à 10 µm et qui comporte, entre les particules primaires, des cavités ou canaux dont la partie macroscopique des cavités ou canaux, qui présente un diamètre supérieur à 1 mm, au niveau des particules de l'oxyde anorganique, correspond à un volume de l'ordre de 5 à 30 volumes % et où le rapport molaire composé du magnésium/oxyde anorganique formé de petites particules est de l'ordre de 0,5 /1 à 2,0 /1.

**2.** Système catalytique selon la revendication 1, dans lequel l'oxyde anorganique formé de petites particules satisfait en outre à une des conditions suivantes :

(I) soit moins de 10 % en volume des particules primaires présentent un diamètre de particules d supérieur à 15 µm,
(II) soit moins de 5 % en volume des particules primaires présentent un diamètre de particules d supérieur à 20 µm.

**3.** Système catalytique selon l'une des revendications 1 ou 2, dans lequel l'oxyde anorganique formé de petites particules est soumis à un séchage par pulvérisation.

**4.** Système catalytique selon l'une quelconque des revendications 1 à 3, dans lequel l'oxyde anorganique formé de petites particules est un oxyde du silicium, de l'aluminium, du titane ou un oxyde d'un métal des groupes I ou II de la classification périodique des éléments ou des mélanges de tels oxydes.

**5.** Système catalytique selon l'une quelconque des revendications 1 à 4, dans lequel le composé électro-donneur interne est un ester d'acide carbonique.

**6.** Système catalytique selon l'une quelconque des revendications 1 à 5, dans lequel le composé électro-donneur externe c est un composé organosilicium.

**7.** Système catalytique selon l'une quelconque des revendications 1 à 6, dans lequel le composé d'aluminium d est le trialkylaluminium.

**8.** Procédé de préparation d'homopolymérisats du propylène ou de copolymérisats du propylène avec un ou plusieurs autres alk-1-ènes comportant jusqu'à 10 atomes de carbone, **caractérisée en ce que** la polymérisation est mise en oeuvre en présence d'un système catalytique selon l'une quelconques des revendications 1 à 7.